(19) Europäisches Patentamt / European Patent Office / Office européen des brevets

(11) EP 4 296 394 A1

(12) **EUROPEAN PATENT APPLICATION**
published in accordance with Art. 153(4) EPC

(43) Date of publication:
**27.12.2023 Bulletin 2023/52**

(21) Application number: **22774905.8**

(22) Date of filing: **25.02.2022**

(51) International Patent Classification (IPC):
***C22C 38/00*** *(2006.01)* ***C21D 9/46*** *(2006.01)*
***C22C 38/06*** *(2006.01)* ***C22C 38/60*** *(2006.01)*
***C23C 2/06*** *(2006.01)* ***C22C 18/00*** *(2006.01)*

(52) Cooperative Patent Classification (CPC):
**C21D 9/46; C22C 18/00; C22C 38/00; C22C 38/06; C22C 38/60; C23C 2/06**

(86) International application number:
**PCT/JP2022/008094**

(87) International publication number:
**WO 2022/202107 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2021 JP 2021050820**

(71) Applicant: **JFE Steel Corporation**
**Tokyo 100-0011 (JP)**

(72) Inventors:
- **MAEDA, Satoshi**
  **Tokyo 100-0011 (JP)**
- **YOSHITOMI, Hiromi**
  **Tokyo 100-0011 (JP)**
- **KOBA, Masaki**
  **Tokyo 100-0011 (JP)**
- **KAWABE, Nao**
  **Tokyo 100-0011 (JP)**
- **NAKAGAITO, Tatsuya**
  **Tokyo 100-0011 (JP)**
- **HOSHINO, Katsuya**
  **Tokyo 100-0011 (JP)**
- **MATSUDA, Hiroshi**
  **Tokyo 100-0011 (JP)**

(74) Representative: **Haseltine Lake Kempner LLP**
**One Portwall Square**
**Portwall Lane**
**Bristol BS1 6BH (GB)**

(54) **GALVANIZED STEEL SHEET AND COLD-ROLLED STEEL SHEET**

(57) To provide a galvanized steel sheet having high strength, specifically, a tensile strength of 1,150 MPa or more, and excellent resistance spot weldability, a base steel sheet has a defined chemical composition, an amount of diffusible hydrogen in the base steel sheet is 0.20 mass ppm or less, and surface roughness Ra of the galvanized steel sheet is 0.6 μm or less.

## Description

### TECHNICAL FIELD

The present disclosure relates to a galvanized steel sheet and a cold-rolled steel sheet used as a material in production of the galvanized steel sheet (constituting a base steel sheet of the galvanized steel sheet).

### BACKGROUND

In recent years, enhancement of fuel efficiency of automobiles has become an important issue from the viewpoint of global environment protection. Therefore, there is a growing trend to reduce weight of automotive bodies by increasing strength and reducing thickness of steel sheets used as a material of automotive components. In view of automotive body rust resistance, steel sheets used as a material of automotive components are sometimes galvanized. Therefore, there is a need to develop galvanized steel sheets having high strength.

Such galvanized steel sheets, for example, are described in JP 6795122 B (PTL 1):
"A high-strength hot-dip galvanized steel sheet having a hot-dip galvanized layer on a steel sheet surface, a steel composition containing, in mass%, C: 0.07 % to 0.20 %, Si: 0.1 % to 2.0 %, Mn: 2.0 % to 3.5 %, P: 0.05 % or less, S: 0.05 % or less, and Sol. Al: 0.005 % to 0.1 %, with the balance being Fe and inevitable impurity, the steel microstructure being, in terms of area ratio, ferrite: 60 % or less, tempered martensite: 40 % or more, and fresh martensite: 10 % or less, and in a VDA bending test, a void density in a bent section is 1,500/$mm^2$ or less."

### CITATION LIST

#### Patent Literature

PTL 1: JP 6795122 B

### SUMMARY

#### (Technical Problem)

When assembling automobiles, two or more overlapping steel sheets (hereinafter, also referred to as a sheet combination) are often joined by resistance spot welding for cost and efficiency reasons.

Resistance spot welding is a method in which pressure is applied to two or more overlapping steel sheets from a pair of electrodes from above and below while passing a high welding current between the upper and lower electrodes for a short time to bond the steel sheets. Heat generated from the resistance to the flow of the high welding current is used to obtain a spot weld. The welded portion is called a nugget. The nugget is a portion where the steel sheets that constitute a sheet combination melt and solidify against each other at the contact points when an electric current is applied to the sheet combination. The steel sheets are spot-welded by this nugget.

In actual execution of resistance spot welding, nugget diameter may be smaller than usual due to inevitable changes in welding conditions, such as in accuracy of sheet positioning and a degree of adhesion between sheets.

However, when resistance spot welding is performed under conditions where the nugget diameter becomes small when a galvanized steel sheet is included in the sheet combination, as described in PTL 1, cracking occurs near an edge of the nugget. The cracking may then become an initiation point for destruction of the nugget. Such cracking near the edge of the nugget tends to occur more easily as the nugget gets smaller, and there is a need for improvement in this area.

The present disclosure was developed in view of the situation described above, and it would be helpful to provide a galvanized steel sheet having high strength, specifically, a tensile strength of 1,150 MPa or more, and excellent resistance spot weldability.

It would also be helpful to provide a cold-rolled steel sheet used as a material in production of the galvanized steel sheet (constituting a base steel sheet of the galvanized steel sheet).

Here, "excellent resistance spot weldability" means that $D/\sqrt{t}$ (a value obtained by dividing the smallest nugget diameter D (mm) by the square root of the thickness t (mm) of the galvanized steel sheet) measured by a resistance spot weldability evaluation described in an example described below is 4.0 or less.

#### (Solution to Problem)

The inventors conducted intensive studies to solve the technical problem outlined above.

First, the inventors studied how to obtain a high tensile strength of 1,150 MPa or more, and found that appropriately adjusting a chemical composition of the base steel sheet of a galvanized steel sheet, especially utilizing C and Mn, is effective.

Next, the inventors examined what factors affect the resistance spot weldability of galvanized steel sheets when the chemical composition of the base steel sheet is adjusted as described above.

As a result, the inventors found that an amount of diffusible hydrogen in the base steel sheet is a factor affecting the resistance spot weldability of galvanized steel sheets (hereinafter also referred to as a factor affecting resistance spot weldability).

That is, diffusible hydrogen released externally from the base steel sheet when the galvanized steel sheet is heated migrates to the nugget during resistance spot welding, causing embrittlement of the weld. Therefore, the amount of diffusible hydrogen in the base steel sheet is a factor affecting resistance spot weldability.

However, simply reducing the amount of diffusible hydrogen in the base steel sheet did not sufficiently improve the resistance spot weldability of galvanized steel sheets.

The inventors then wondered if there were other factors besides the amount of diffusible hydrogen in the base steel sheet of a galvanized steel sheet that might be a factor affecting resistance spot weldability, and further conducted various experiments and studies.

As a result, the inventors found that a surface (a zinc or zinc alloy coating layer) roughness of a galvanized steel sheet might be a factor affecting resistance spot weldability.

That is, when the surface of a galvanized steel sheet becomes rough and surface irregularities are formed, anti-rust oil and other unwanted material enters the irregularities. When spot welding is performed with such anti-rust oil and other unwanted materials getting into the surface irregularities, the anti-rust oil and other unwanted material gets caught up in the nugget. The inventors arrived at a conclusion that this might result in embrittlement of the weld and eventual cracking.

Therefore, the inventors studied conditions of temper rolling after forming a coating layer (or plating layer) to smooth a surface of a galvanized steel sheet.

However, surface roughness of a galvanized steel sheet could not be smoothed beyond a certain level simply by controlling the conditions of temper rolling, which is performed after the formation of the zinc or zinc alloy coating layer.

The inventors further investigated the conditions for smoothing the surface of a galvanized steel sheet, and found that, in order to smooth the surface of a galvanized steel sheet, not only the conditions for temper rolling but also smoothing the surface of a cold-rolled steel sheet used as a material in production of the galvanized steel sheet is important.

That is, conventional thinking was that the surface of a galvanized steel sheet could be smoothed regardless of surface roughness of the cold-rolled steel sheet used as a material in production of the galvanized steel sheet by controlling the conditions of temper rolling after the coating layer is formed. However, a result of the inventors' studies was the finding that in temper rolling, the rolls come into contact with only the coating layer. In other words, in temper rolling, the rolls do not contact the underlying cold-rolled steel sheet, and only contact the coating layer. Therefore, the inventors found that temper rolling alone could not eliminate the surface irregularities of a galvanized steel sheet (coating layer) caused by the surface irregularities of the cold-rolled steel sheet that was used as a material in production of the galvanized steel sheet. Accordingly, in order to sufficiently smooth the surface of a galvanized steel sheet, not only the conditions of temper rolling but also smoothing the surface of the cold-rolled steel sheet used as a material in production of the galvanized steel sheet is important.

The inventors then further investigated based on the above findings, and found the following:

(a) excellent resistance spot weldability is obtained by setting an amount of diffusible hydrogen in a base steel sheet to 0.20 mass ppm or less and a surface roughness Ra of a galvanized steel sheet to 0.6 μm or less;
(b) to achieve the surface roughness Ra of 0.6 μm or less of the galvanized steel sheet, a surface roughness Ra of a cold-rolled steel sheet that is used as a material in production of the galvanized steel sheet needs to be 1.0 μm or less, and temper rolling conditions after forming a coating layer, especially roughness and elongation rate of a work roll used, need to be controlled appropriately; and
(c) to achieve the surface roughness Ra of 1.0 μm or less of the cold-rolled steel sheet that is used as a material in production of the galvanized steel sheet, appropriately controlling roughness and elongation rate of a roll used in a final pass of a cold rolling process is necessary.

The present disclosure is based on these discoveries and further studies.

Primary features of the present disclosure are as follows.

1. A galvanized steel sheet comprising a base steel sheet and a zinc or zinc alloy coating layer on a surface of the base steel sheet, wherein

the base steel sheet comprises:

a chemical composition containing (consisting of), in mass%,

C: 0.08 % or more and 0.30 % or less,
Si: less than 2.0 %,
Mn: 1.5 % or more and 3.5 % or less,
P: 0.010 % or less,
S: 0.010 % or less,
Al: 0.10 % or less, and
N: 0.006 % or less,

with the balance being Fe and inevitable impurity;
an amount of diffusible hydrogen in the base steel sheet is 0.20 mass ppm or less,
surface roughness Ra of the galvanized steel sheet is 0.6 μm or less, and
tensile strength is 1,150 MPa or more.

2. The galvanized steel sheet of aspect 1, wherein the chemical composition of the base steel sheet further contains (consists of) at least one of the following (1) to (5), in mass%:

(1) at least one of Ti, Nb, V, and Zr totaling 0.10 % or less,
(2) at least one of Mo, Cr, Cu, and Ni totaling 0.5 % or less,
(3) B: 0.0050 % or less,
(4) Sb: 0.10 % or less,
(5) Sn: 0.10 % or less.

3. The galvanized steel sheet of aspect 1 or 2, wherein the zinc or zinc alloy coating layer is a hot-dip galvanized layer or a galvannealed layer having Fe content: 8 mass% to 15 mass%.
4. The galvanized steel sheet of any one of aspects 1 to 3, wherein a coating weight of one side of the zinc or zinc alloy coating layer is 20 $g/m^2$ to 120 $g/m^2$.
5. A cold-rolled steel sheet that is used as a material in production of the galvanized steel sheet of any one of aspects 1 to 4, wherein
surface roughness Ra of the cold-rolled steel sheet is 1.0 μm or less.

(Advantageous Effect)

The present disclosure provides a galvanized steel sheet having high strength and excellent resistance spot weldability.

DETAILED DESCRIPTION

The following describes embodiments of the present disclosure.

[1] Galvanized steel sheet

First, a chemical composition of a base steel sheet of a galvanized steel sheet according to an embodiment of the present disclosure is described. Hereinafter, although the unit in all chemical compositions is "mass%", this may be indicated simply as "%", unless otherwise specified.

C: 0.08 % or more and 0.30 % or less

C is an element effective in increasing the strength of steel, in particular contributing through formation of martensite, a hard phase in steel microstructure. Here, from a viewpoint of obtaining a desired high strength, and specifically, tensile strength of 1,150 MPa or more, the C content is 0.08 % or more. On the other hand, the C content exceeding 0.30 % leads to a reduction in resistance spot weldability. Therefore, the C content is 0.08 % or more. The C content is 0.30 % or less. The C content is preferably 0.10 % or more. The C content is preferably 0.28 % or less.

Si: Less than 2.0 %

Si is an element effective in increasing the strength of steel. From the viewpoint of obtaining this effect, the Si content is preferably 0.1 % or more. On the other hand, when the Si content is 2.0 % or more, an Si-based oxide is more likely to form on a surface of a cold-rolled steel sheet that constitutes the base steel sheet, which may cause non-coating. Surface appearance damage may also occur. Therefore, the Si content is less than 2.0 %. The Si content is preferably 1.8 % or less. The Si content is more preferably 1.6 % or less.

Mn: 1.5 % or more and 3.5 % or less

Mn is an element that contributes to an increase in steel strength through solid solution strengthening and martensite formation. To obtain this effect, the Mn content is 1.5 % or more. The Mn content is preferably 1.8 % or more. The Mn content is more preferably 2.0 % or more. On the other hand, the Mn content exceeding 3.5 % leads to cracking of a welded portion during resistance spot welding. Further, unevenness in the steel microstructure caused by Mn segregation and other factors leads to a decrease in workability. Further, Mn may form oxides or complex oxides on a surface of the base steel sheet, causing non-coating. Therefore, the Mn content is 3.5 % or less. The Mn content is preferably 3.4 % or less. The Mn content is more preferably 3.3 % or less.

P: 0.010 % or less

P is an element that contributes to an increase in steel strength through solid solution strengthening. However, the P content exceeding 0.010 % leads to a reduction in resistance spot weldability, as well as in workability such as stretch flangeability. Therefore, the P content is 0.010 % or less. The P content is preferably 0.008 % or less. The P content is more preferably 0.007 % or less. The lower limit of P content is not particularly limited. However, an attempt to reduce the P content to less than 0.001 % leads to lower production efficiency and higher costs to eliminate P in production. Therefore, the P content is preferably 0.001 % or more.

S: 0.010 % or less

S is a harmful element that causes a decrease in resistance spot weldability and hot brittleness, and is present in steel as a sulfide inclusion that reduces the workability of steel sheets. Therefore, the S content is preferably as low as possible, and the S content is 0.010 % or less. The lower limit of S content is not particularly limited. However, an attempt to reduce the S content to less than 0.0001% leads to lower production efficiency and higher costs to eliminate S in production. Therefore, the S content is preferably 0.0001 % or more.

Al: 0.10 % or less

Al is added as a deoxidizing material. From the viewpoint of obtaining the deoxidizing effect, the Al content is preferably 0.005 % or more. The Al content is more preferably 0.01 % or more. The Al content is more preferably 0.02 % or more. On the other hand, the Al content exceeding 0.10 % leads to a reduction in resistance spot weldability. Further, this also causes an increase in raw material cost and induces surface defects in steel sheets. Therefore, the Al content is 0.10 % or less. The Al content is preferably 0.09 % or less. The Al content is more preferably 0.08 % or less.

N: 0.006 % or less

The N content exceeding 0.006% causes excessive nitrides to be formed in the steel, which reduces ductility and toughness. Therefore, the Ni content is 0.006 % or less. The N content is preferably 0.005 % or less. The N content is more preferably 0.004 % or less. From the viewpoint of improving ductility by ferrite cleaning, the N content is preferably as small as possible. However, an excessive attempt to reduce N leads to lower production efficiency and higher costs in production. Therefore, the N content is preferably 0.0001 % or more. The N content is more preferably 0.0010 % or more. The N content is even more preferably 0.0015 % or more.

Basic composition of the base steel sheet of the galvanized steel sheet according to an embodiment of the present disclosure is described above. The base steel sheet of the galvanized steel sheet according to an embodiment of the present disclosure comprises the basic composition above, with the balance being Fe (iron) and inevitable impurity. Here, the base steel sheet of the galvanized steel sheet according to an embodiment of the present disclosure preferably has a chemical composition comprising the basic composition above, with the balance being Fe and inevitable impurity. In addition to the above basic composition, the base steel sheet of the galvanized steel sheet according to an embodiment of the present disclosure may further contain at least one of the following (1) to (5) as an optional component.

(1) at least one of Ti, Nb, V, and Zr totaling 0.10 % or less
(2) at least one of Mo, Cr, Cu, and Ni totaling 0.5 % or less
(3) B: 0.0050 % or less
(4) Sb: 0.10 % or less
(5) Sn: 0.10 % or less

The optional components listed below do not have a lower limit, as the defined effect may be obtained whenever content is equal to or less than the upper limit indicated below. When any of the following optional components are included below an appropriate lower limit described below, such a component is included as an inevitable impurity.

At least one of Ti, Nb, V, and Zr totaling 0.10 % or less

Ti, Nb, V, and Zr contribute to an increase in steel sheet strength by forming fine precipitates such as carbides and nitrides (and sometimes carbonitrides) with C and N. These elements are also useful for hydrogen trapping sites (neutralization) in steel. From the viewpoint of obtaining such an effect, a total of 0.005 % or more of at least one of Ti, Nb, V, and Zr is preferable. Total content of these elements is more preferably 0.015 % or more. Total content of these elements is even more preferably 0.030 % or more. However, the total content of these elements exceeding 0.10 % leads to an increase in deformation resistance during cold rolling, resulting in lower productivity. Further, the ductility of ferrite is reduced due to coarsening and excess precipitates, which reduces the workability of the galvanized steel sheet, such as ductility, bendability and stretch flangeability. Therefore, the total content of these elements is preferably 0.10 % or less. The total content of these elements is more preferably 0.08 % or less. The total content of these elements is even more preferably 0.06 % or less.

At least one of Mo, Cr, Cu, and Ni totaling 0.5 % or less

Mo, Cr, Cu, and Ni are elements that increase hardenability of steel and facilitate the formation of martensite, thereby contributing to an increase in steel strength. From the viewpoint of achieving such an effect, a total of 0.005 % or more of at least one of Mo, Cr, Cu, and Ni is preferable. The total content of these elements is more preferably 0.01 % or more. The total content of these elements is even more preferably 0.05 % or more. However, the total content of these elements exceeding 0.5 % leads to the above effects being saturated and costs increasing. Therefore, the total content of these elements is preferably 0.5 % or less.

Cu may cause surface defects by inducing cracking during hot rolling. In this regard, Ni has an effect of inhibiting the occurrence of surface defects caused by Cu, and therefore including Ni is preferable when Cu is included. In this case, Ni content of 1/2 or more of the Cu content is particularly preferable.

B: 0.0050 % or less

B is also an element that increases the hardenability of steel and facilitates the formation of martensite, thereby contributing to an increase in steel strength. From the viewpoint of obtaining this effect, the B content is preferably 0.0003 % or more. The B content is more preferably 0.0005 % or more. The B is content is even more preferably 0.0010 % or more. However, the B content exceeding 0.0050 % leads to an excessive increase in hardenability of steel, leading to weld cracking during resistance spot welding. Therefore, the B content is preferably 0.0050 % or less.

Sb: 0.10 % or less

Sb is an element that inhibits decarburization, denitrification, deboronization, and the like, thereby reducing strength loss of steel sheets. Sb also works effectively in inhibiting cracking of welds formed by resistance spot welding. Therefore, the Sb content is preferably 0.001 % or more. The Sb content is more preferably 0.003 % or more. The Sb content is even more preferably 0.005 % or more. However, the Sb content exceeding 0.10 % leads to a reduction in workability, such as in stretch flangeability of the galvanized steel sheet. Therefore, the Sb content is preferably 0.10 % or less. The Sb content is more preferably 0.030 % or less. The Sb content is even more preferably 0.010 % or less.

Sn: 0.10 % or less

Like Sb, Sn is an element that inhibits decarburization, denitrification, deboronization, and the like, thereby reducing strength loss of steel sheets. Sn also works effectively in inhibiting cracking of welds formed by resistance spot welding. Therefore, the Sn content is preferably 0.001 % or more. The Sn content is more preferably 0.003 % or more. The Sn content is even more preferably 0.005 % or more. However, the Sn content exceeding 0.10 % leads to a reduction in workability, such as in stretch flangeability of the galvanized steel sheet. Therefore, the Sn content is preferably 0.10 % or less. The Sn content is more preferably 0.030 % or less. The Sn content is even more preferably 0.010 % or less.

Other than the above components, the balance is Fe and inevitable impurity. When any of the above optional elements are included below the appropriate lower limit described, such an element is included as an inevitable impurity.

Next, appropriate steel microstructure of the base steel sheet of the galvanized steel sheet according to an embodiment of the present disclosure is described.

From the viewpoint of obtaining a tensile strength of 1,150 MPa or more, the area ratio of martensite to the entire microstructure (hereinafter also referred to simply as area ratio) is preferably 40 % or more. The area ratio of martensite is more preferably 60 % or more. The area ratio of martensite is even more preferably 80 % or more. The area ratio of martensite may be 100 %.

The area ratio of residual microstructure other than martensite is preferably 60 % or less. The area ratio of the residual microstructure is more preferably 40 % or less. The area ratio of the residual microstructure is even more preferably 20 % or less. The area ratio of the residual microstructure may be 0 %.

The residual microstructure includes ferrite, retained austenite, pearlite, bainite, and the like.

The area ratio of martensite is measured as follows.

A specimen is taken from a galvanized steel sheet so that an L-section parallel to a rolling direction of the base steel sheet is a test surface. The test surface of the specimen is then mirror polished, and the microstructure is revealed with a nital solution. The test surface of the specimen with the microstructure revealed is observed by a scanning electron microscope (SEM) at a magnification of 1,500, and the area ratio of martensite at 1/4 of the thickness of the base steel sheet is measured by a point counting method. The area ratio of the residual microstructure is calculated by subtracting the area ratio of martensite from 100 %. In the SEM image, martensite presents a white microstructure.

Further, an amount of diffusible hydrogen is preferably 0.20 mass ppm or less in the base steel sheet of the galvanized steel sheet according to an embodiment of the present disclosure.

Diffusible hydrogen content: 0.20 mass ppm or less

Diffusible hydrogen is hydrogen that is released externally from the steel when the galvanized steel sheet is heated. Therefore, diffusible hydrogen migrates to the nugget during resistance spot welding, especially when the amount of diffusible hydrogen exceeds 0.20 mass ppm, leading to embrittlement of the welded portion and eventually cracking. Therefore, the amount of diffusible hydrogen is preferably 0.20 mass ppm or less. The amount of diffusible hydrogen is preferably 0.10 mass ppm or less. The lower limit of diffusible hydrogen content is not particularly limited, and may be 0 mass ppm. However, an attempt to reduce the amount of diffusible hydrogen to less than 0.01 mass ppm may lead to a decrease in production efficiency. Therefore, the amount of diffusible hydrogen is preferably 0.01 mass ppm or more.

The amount of diffusible hydrogen is a value obtained by dividing an amount of hydrogen released (an amount of hydrogen released from the specimen) by mass of the specimen, where the amount of hydrogen released is measured by heating rate analysis using gas chromatography with the base steel sheet as the specimen under the conditions of heating end-point temperature: 210 °C and heating rate: 200 °C/hr. More specifically, the amount of diffusible hydrogen is measured as follows.

The zinc or zinc alloy coating layer on the surface of the galvanized steel sheet is removed by physically grinding with a die grinder or the like. An amount of grinding of the base steel sheet portion is 5 % or less of the thickness of the base steel sheet. Then, a steel sheet consisting only of the base steel sheet portion from which the zinc or zinc alloy coating layer has been removed is used as a specimen to measure the hydrogen release rate (the amount of hydrogen released from the specimen per minute) by heating rate analysis using gas chromatography under the conditions of the heating end-point temperature of 210 °C and the heating rate of 200 °C/h, with a measurement cycle of 5 min. The total amount of hydrogen released from the specimen is then calculated by integrating the hydrogen release rate measured at each measurement cycle over the measurement time (the time from the start of the heating to 210 °C). The total amount of hydrogen released from the specimen is then divided by the mass of the sample (before analysis) and converted to mass ppm units, and this is the diffusible hydrogen content of the base steel sheet.

The above integration is specifically calculated by the following formula.

$$[\text{Total amount of hydrogen released from specimen}] = (A_1 + A_2 + \ldots + A_{N-1} + A_N) \times 5\ \text{min}$$

Here, N is the number of the hydrogen release rate measurements from the start of the heating until the temperature reaches 210 °C, and $A_N$ is the hydrogen release rate (the amount of hydrogen per minute released from the specimen) at the Nth measurement.

In the galvanized steel sheet according to an embodiment of the present disclosure, the roughness of the surface (zinc or zinc alloy coating layer) being 0.6 μm or less in terms of surface roughness Ra is extremely important.

Surface roughness Ra of galvanized steel sheet: 0.6 μm or less

When the surface of the galvanized steel sheet becomes rough and surface irregularities are formed, anti-rust oil and other unwanted material enters the irregularities. When spot welding is performed with such anti-rust oil and other unwanted materials getting into the surface irregularities, the anti-rust oil and other unwanted material gets caught up in the nugget. This results in weld embrittlement and eventually leads to cracking. Therefore, the surface roughness Ra of the galvanized steel sheet is 0.6 μm or less. The surface roughness Ra of the galvanized steel sheet is preferably 0.5 μm or less. Although the lower limit of the surface roughness Ra of the galvanized steel sheet is not particularly limited, reducing the surface roughness Ra of the galvanized steel sheet is linked to higher manufacturing costs, and is therefore preferably 0.1 μm or more.
The surface roughness Ra is an arithmetic mean roughness Ra specified in Japanese Industrial Standards (JIS) JIS B 0601 (1994), and is more specifically measured as follows.
A roughness curve of the surface of the galvanized steel sheet is measured at any area of the surface of the galvanized steel sheet under the conditions of reference length: 2.5 mm and cutoff value λc: 0.8 mm, to obtain the arithmetic mean roughness Ra. Ten measurements are taken and the average of the ten measurements is used.
The surface roughness Ra of the cold-rolled steel sheet that is used as a material in production of the galvanized steel sheet according to an embodiment of the present disclosure, as described below, is also measured under the same conditions as above.

Tensile strength (TS): 1,150 MPa or more

The tensile strength of the galvanized steel sheet according to an embodiment of the present disclosure is 1,150 MPa or more. The tensile strength of the galvanized steel sheet according to an embodiment of the present disclosure is preferably 1,180 MPa or more.
Here, tensile strength (TS) is measured as follows.
A JIS No. 5 test specimen is taken from the galvanized steel sheet with a gauge length of 50 mm, such that a longitudinal direction is perpendicular to the rolling direction of the base steel sheet. Then, the collected JIS No. 5 test specimen is used to conduct a tensile test in accordance with the provisions of JIS Z 2241 (2011) to measure tensile strength (TS). The tensile speed is 10 mm/min.
The zinc or zinc alloy coating layer of the galvanized steel sheet according to an embodiment of the present disclosure may be provided on only one surface of the base steel sheet, and may be provided on both surfaces.
The zinc or zinc alloy coating layer here refers to a coating layer in which Zn is the main component (Zn content of 80 mass% or more), for example, a hot-dip galvanized layer or a galvannealed layer.
Here, the hot dip galvanized layer is basically composed of Zn, and the balance is inevitable impurity.
The galvannealed layer is basically composed of Zn and 8 mass% to 15 mass% Fe, with the balance being inevitable impurity.
Further, a coating weight per side of the zinc or zinc alloy coating layer is preferably 20 g/m$^2$ to 120 g/m$^2$. When the coating weight per side of the zinc or zinc alloy coating layer is less than 20 g/m$^2$ , the anti-rust properties of the zinc coating may not be sufficient. Further, when the coating weight per side of the zinc or zinc alloy coating layer exceeds 120 g/m$^2$ , the cost is high.
Here, the coating weight of the zinc or zinc alloy coating layer and Fe content in the zinc or zinc alloy coating layer (galvannealed layer) are measured as follows.
A coating solution is prepared by adding 0.6 g of a corrosion inhibitor for Fe ("IBIT 700BK" (IBIT is a registered trademark in Japan, other countries, or both) manufactured by Asahi Chemical Co., Ltd.) to 1 L of a 10 mass% hydrochloric acid aqueous solution. Then, the galvanized steel sheet to be the test specimen is immersed in the coating solution to dissolve the zinc or zinc alloy coating layer. Mass loss of the specimen before and after dissolving is measured, and the value is divided by the surface area of the base steel sheet to calculate the coating weight (g/m$^2$).
The amounts of Zn and Fe dissolved in the coating solution (hereinafter also referred to as Zn dissolved and Fe dissolved) are measured by inductively coupled plasma (ICP) optical emission spectrometry, and the Fe content in the galvannealed layer is determined by the following formula.

$$[\text{Fe content (mass\%) in zinc or zinc alloy coating layer}] = [\text{Fe dissolved}] / ([\text{Fe dissolved}] + [\text{Zn dissolved}]) \times 100$$

The thickness of the galvanized steel sheet according to an embodiment of the present disclosure is preferably 0.8 mm to 2.0 mm.

[2] Cold-rolled steel sheet used as a material in production of the galvanized steel sheet

Next, the cold-rolled steel sheet used as a material in production of the galvanized steel sheet according to an embodiment of the present disclosure is described.
As mentioned above, the surface roughness Ra of the cold-rolled steel sheet used as a material in production of the galvanized steel sheet according to an embodiment of the present disclosure being 1.0 μm or less is important.

Surface roughness Ra of cold-rolled steel sheet used as a material in production of galvanized steel sheet: 1.0 μm or less

As mentioned above, to make the surface roughness Ra of the galvanized steel sheet 0.6 μm or less, the surface roughness Ra of cold-rolled steel sheet that is used as a material in production of the galvanized steel sheet must be 1.0 μm or less.
In other words, as mentioned above, when the surface roughness of cold-rolled steel sheet that is used as a material in production of the galvanized steel sheet is equal to or more than a certain amount, the surface of the galvanized steel sheet is not sufficiently smoothed simply by controlling the rolling conditions of temper rolling, which is performed after the coating layer is formed. Therefore, in order to sufficiently smooth the surface of the galvanized steel sheet and achieve the surface roughness Ra of the galvanized steel sheet of 0.6 μm or less, smoothing the surface of the cold-rolled steel sheet that is used as a material in production of the galvanized steel sheet is also necessary.
Therefore, the surface roughness Ra of the cold-rolled steel sheet that is used as a material in production of the galvanized steel sheet is 1.0 μm or less. The surface roughness Ra of the cold-rolled steel sheet that is used as a material in production of the galvanized steel sheet is preferably 0.6 μm or less. The surface roughness Ra of the cold-rolled steel sheet that is used as a material in production of the galvanized steel sheet is more preferably 0.5 μm or less. The lower limit of the surface roughness Ra of the cold-rolled steel sheet that is used as a material in production of the galvanized steel sheet is not particularly limited, and may be 0 μm. The surface roughness Ra of the cold-rolled steel sheet that is used as a material in production of the galvanized steel sheet is preferably 0.1 μm or more.
The chemical composition of the cold-rolled steel sheet that is used as a material in production of the galvanized steel sheet according to an embodiment of the present disclosure is basically the same as that of the base steel sheet of the galvanized steel sheet, so description is omitted here.
Thickness of the cold-rolled steel sheet that is used as a material in production of the galvanized steel sheet according to an embodiment of the present disclosure is preferably 0.8 mm to 2.0 mm.

[3] Production method

Next, a method of producing the galvanized steel sheet steel sheet and the cold-rolled steel sheet that is used as a material in production of the galvanized steel sheet is described.
First, the cold-rolled steel sheet is prepared for use as a material in production of the galvanized steel sheet.
The cold-rolled steel sheet is prepared, for example, by a process comprising:

a slab heating process, in which a slab having the above chemical composition is heated and held at temperature,
a hot rolling process, in which the slab is hot-rolled to make a hot-rolled steel sheet, and
a cold rolling process, in which the hot-rolled steel sheet is cold-rolled to make cold-rolled steel sheet.

Conventional methods suffice for the slab heating process and the hot rolling process, but for the cold rolling process, appropriately controlling the roughness and elongation rate of the work roll used in the final rolling pass is important. Specifically, the surface roughness Ra is 4.0 μm or less, and the elongation rate is 0.01 % to 5.0 %. This allows the surface roughness Ra of the cold-rolled steel sheet that is used as a material in production of the galvanized steel sheet to be 1.0 μm or less. In cold rolling, a tandem cold rolling mill (TCM) or the like may be used.
Further, a hot-rolled steel sheet obtained in the hot rolling process may be pickled. Pickling conditions are not particularly limited, and a conventional method may be followed.
The resulting cold-rolled steel sheet is then annealed. From the viewpoint of keeping the amount of diffusible hydrogen in the base steel sheet of the galvanized steel sheet at 0.20 mass ppm or less, hydrogen concentration in the annealing atmosphere is preferably 20 volume percent or less. Other than hydrogen, the balance in the annealing atmosphere includes, for example, nitrogen, water vapor, and the like. Other annealing conditions may follow conventional methods. For example, an annealing temperature (soaking temperature) of 750 °C to 880 °C and an annealing time of 30 s to 600 s are suitable.
The cold-rolled steel sheet is then hot-dip galvanized to produce a galvanized steel sheet having a hot-dip galvanized layer (hot-dip galvanized steel sheet). Alternatively, the cold-rolled steel sheet is hot-dip galvanized and subjected to an alloying treatment to produce a galvanized steel sheet having a galvannealed layer (galvannealed steel sheet). The hot dip galvanizing treatment conditions and the alloying treatment conditions are not particularly limited and may follow conventional methods. For example, the alloying temperature in the alloying treatment may be 470 °C to 600 °C.

The annealing treatment and the hot dip galvanizing treatment may be performed in a continuous annealing line (CAL) or in a continuous galvanizing line (CGL). Each may also be performed in a batch process.

The resulting galvanized steel sheet (the galvanized steel sheet made from the cold-rolled steel sheet having the surface roughness Ra of 1.0 μm or less) is then subjected to temper rolling. The surface roughness Ra of the work roll used in the temper rolling being 5.0 μm or less and the elongation rate being 0.01 % to 0.5 % is important. This allows the surface roughness Ra of the galvanized steel sheet to be 0.6 μm or less.

After the temper rolling, the galvanized steel sheet is further subjected to post heat treatment at a treatment temperature of 30 °C to 200 °C for a treatment time of 1 h to 2,160 h. The post heat treatment may further reduce the amount of diffusible hydrogen in the base steel sheet of the galvanized steel sheet without degrading material properties.

## EXAMPLES

Slabs having the compositions listed in Table 1 (the balance being Fe and inevitable impurity) were hot rolled to produce hot-rolled steel sheets, which were then pickled and cold rolled under the conditions listed in Table 2 to obtain cold-rolled steel sheets for use as a material in the production of galvanized steel sheets. The cold-rolled steel sheets were measured for the surface roughness Ra as described above. A laser microscope (VK-9700, manufactured by Keyence Corporation) was used to measure the surface roughness Ra. The measurement results are listed in Table 2. The surface roughness Ra of each of the cold-rolled steel sheets was measured on both the front and back surfaces. For convenience, one surface is indicated as a first surface and the other surface as a second surface. Further, the same laser microscope was also used to measure the surface roughness Ra of the galvanized steel sheets as described below. Further, the surface roughness Ra of the galvanized steel sheets was also measured on both the front and back surfaces. For convenience, one surface is indicated as a first surface and the other surface as a second surface.

The resulting cold-rolled steel sheets were then annealed under the conditions described in Table 3, followed by hot dip galvanizing, and then alloying treatment was applied to the steel sheets other than No. 12 under the conditions listed in Table 3 to obtain the galvanized steel sheets having the zinc or zinc alloy coating layers (hot dip galvanized layers or galvannealed layers) on both surfaces. The galvanized steel sheets were then subjected to temper rolling under the conditions listed in Table 3. For No. 10 and No. 11, further post heat treatment was performed under the conditions listed in Table 3.

The galvanized steel sheets obtained were used to measure the amount of diffusible hydrogen in the base steel sheet, the surface roughness Ra, the tensile strength, and the coating weight of the galvanized steel sheet, and the Fe content of the alloyed galvanized layer, as described above. The measurement results are listed in Table 4.

The area ratio of martensite in the steel microstructure of the base steel sheet was measured as described above, and the area ratio of martensite was 40 % or more for all of the steel sheets.

Resistance spot weldability was then evaluated for the galvanized steel sheets as follows.

- Evaluation of resistance spot weldability

From the galvanized steel sheets, 30 mm × 100 mm sheet samples were taken. Next, two sheet samples taken from each of the galvanized steel sheets were superimposed on each other, with 2 mm thick sheets (30 mm × 30 mm) as spacers sandwiched therebetween at both ends of the sheet samples in the longitudinal direction. The spacer interval was 40 mm, and the sheet samples and the spacers were fixed by welding in advance. The superimposed sheet samples were then joined at a center portion between the spacers at both ends by resistance spot welding to produce the test specimens. In the resistance spot welding, an inverter direct current (DC) resistance spot welder was used, and the electrodes were dome types having tip diameters of 6 mm made of chrome copper. The applied pressure was 380 kgf, the current passage time was 16 cycles/50 Hz, and the holding time was 5 cycles/50 Hz. The welding current was varied from 4.0 kA to 6.0 kA in 0.1 kA increments using multiple test specimens made from the same galvanized steel sheet to produce weldments having various nugget diameters.

After storing the weldment for 24 hours after welding, the spacer portions were cut off and the weld nugget was observed in cross section to visually check for cracks due to embrittlement. A smallest nugget diameter D (mm) with no cracks observed was then determined, and the smallest nugget diameter D (mm) was divided by the square root of the thickness t (mm) of the galvanized steel sheet to obtain D/√t. Resistance spot weldability was then evaluated according to the following criteria. The evaluation results are listed in Table 4.

◎ (Pass, especially excellent): D/√t of 3.0 or less
○ (Pass, Excellent): D/√t of more than 3.0 and 4.0 or less

× (Fail): D/√t exceeds 4.0

[Table 1]

Table 1

| Steel sample ID | Chemical composition (mass%) | | | | | | | | | | | | | | | | | | Remarks |
|---|---|---|---|---|---|---|---|---|---|---|---|---|---|---|---|---|---|---|---|
| | C | Si | Mn | P | S | Al | N | Ti | Nb | V | Zr | Mo | Cr | Cu | Ni | B | Sb | Sn | |
| A | 0.12 | 0.5 | 2.5 | 0.008 | 0.003 | 0.03 | 0.004 | - | - | - | - | - | - | - | - | - | - | - | Conforming steel |
| B | 0.21 | 0.5 | 2.5 | 0.008 | 0.003 | 0.03 | 0.004 | - | - | - | - | - | - | - | - | - | - | - | Conforming steel |
| C | 0.26 | 0.5 | 2.5 | 0.008 | 0.003 | 0.03 | 0.004 | - | - | - | - | - | - | - | - | - | - | - | Conforming steel |
| D | 0.12 | - | 2.5 | 0.008 | 0.003 | 0.03 | 0.004 | - | - | - | - | - | - | - | - | - | - | - | Conforming steel |
| E | 0.12 | 1.9 | 2.7 | 0.008 | 0.003 | 0.03 | 0.004 | - | - | - | - | - | - | - | - | - | - | - | Conforming steel |
| F | 0.12 | 0.5 | 1.6 | 0.008 | 0.003 | 0.03 | 0.004 | - | - | - | - | - | - | - | - | - | - | - | Conforming steel |
| G | 0.12 | 0.5 | 3.5 | 0.008 | 0.003 | 0.03 | 0.004 | - | - | - | - | - | - | - | - | - | - | - | Conforming steel |
| H | 0.12 | 0.5 | 2.5 | 0.008 | 0.003 | 0.03 | 0.004 | 0.05 | - | - | - | - | - | - | - | - | - | - | Conforming steel |
| I | 0.12 | 0.5 | 2.5 | 0.008 | 0.003 | 0.03 | 0.004 | - | 0.05 | - | - | - | - | - | - | - | - | - | Conforming steel |
| J | 0.12 | 0.5 | 2.5 | 0.008 | 0.003 | 0.03 | 0.004 | - | - | 0.05 | - | - | - | - | - | - | - | - | Conforming steel |
| K | 0.12 | 0.5 | 2.5 | 0.008 | 0.003 | 0.03 | 0.004 | - | - | - | 0.05 | - | - | - | - | - | - | - | Conforming steel |
| L | 0.12 | 0.5 | 2.5 | 0.008 | 0.003 | 0.03 | 0.004 | - | - | - | - | 0.3 | - | - | - | - | - | - | Conforming steel |
| M | 0.12 | 0.5 | 2.5 | 0.008 | 0.003 | 0.03 | 0.004 | - | - | - | - | - | 0.3 | - | - | - | - | - | Conforming steel |
| N | 0.12 | 0.5 | 2.5 | 0.008 | 0.003 | 0.03 | 0.004 | - | - | - | - | - | - | 0.3 | - | - | - | - | Conforming steel |
| O | 0.12 | 0.5 | 2.5 | 0.008 | 0.003 | 0.03 | 0.004 | - | - | - | - | - | - | - | 0.3 | - | - | - | Conforming steel |
| P | 0.12 | 0.5 | 2.5 | 0.008 | 0.003 | 0.03 | 0.004 | - | - | - | - | - | - | - | - | 0.0030 | - | - | Conforming steel |
| Q | 0.12 | 0.5 | 2.5 | 0.008 | 0.003 | 0.03 | 0.004 | - | - | - | - | - | - | - | - | - | 0.05 | - | Conforming steel |
| R | 0.12 | 0.5 | 2.5 | 0.008 | 0.003 | 0.03 | 0.004 | - | - | - | - | - | - | - | - | - | - | 0.05 | Conforming steel |

[Table 2]

Table 2

| No. | Steel sample ID | Production conditions | | | | | | (Material used in production of galvanized steel sheet) Cold-rolled steel sheet | | Remarks |
|---|---|---|---|---|---|---|---|---|---|---|
| | | Hot rolling | | | Cold rolling | | | | | |
| | | Heating temperature (°C) | Rolling finish temperature (°C) | Coiling temperature (°C) | Cold rolling ratio (%) | Final pass elongation rate (%) | Surface roughness Ra of work roll in final pass (μm) | First side surface roughness Ra (μm) | Second side surface roughness Ra (μm) | |
| 1 | A | 1200 | 900 | 550 | 40 | 0.1 | 2.5 | 0.3 | 0.3 | Example |
| 2 | A | 1200 | 900 | 550 | 40 | 2.2 | 2.5 | 0.5 | 0.4 | Example |
| 3 | A | 1200 | 900 | 550 | 40 | 3.4 | 2.5 | 0.5 | 0.6 | Example |
| 4 | A | 1200 | 900 | 550 | 40 | 4.8 | 2.5 | 0.8 | 0.8 | Example |
| 5 | A | 1200 | 900 | 550 | 40 | ***6.3*** | 2.5 | ***1.2*** | ***1.2*** | Comparative example |
| 6 | A | 1200 | 900 | 550 | 40 | 2.2 | 1.0 | 0.2 | 0.2 | Example |
| 7 | A | 1200 | 900 | 550 | 40 | 2.2 | 3.6 | 0.8 | 0.8 | Example |
| 8 | A | 1200 | 900 | 550 | 40 | 2.2 | ***4.8*** | ***1.3*** | ***1.3*** | Comparative example |
| 9 | A | 1200 | 900 | 550 | 40 | 2.2 | 2.5 | 0.5 | 0.6 | Comparative example |
| 10 | A | 1200 | 900 | 550 | 40 | 3.4 | 2.5 | 0.5 | 0.6 | Example |
| 11 | A | 1200 | 900 | 550 | 40 | 3.4 | 2.5 | 0.5 | 0.6 | Example |
| 12 | A | 1200 | 900 | 550 | 40 | 2.2 | 2.5 | 0.5 | 0.6 | Example |
| 13 | A | 1200 | 900 | 550 | 40 | 2.2 | 2.5 | 0.5 | 0.6 | Example |
| 14 | A | 1200 | 900 | 550 | 40 | 2.2 | 2.5 | 0.5 | 0.6 | Example |
| 15 | A | 1200 | 900 | 550 | 40 | 2.2 | 2.5 | 0.5 | 0.6 | Comparative example |
| 16 | B | 1200 | 900 | 550 | 40 | 2.2 | 2.5 | 0.5 | 0.6 | Example |
| 17 | C | 1200 | 900 | 550 | 40 | 2.2 | 2.5 | 0.5 | 0.6 | Example |

(continued)

| No. | Steel sample ID | Production conditions | | | | | | (Material used in production of galvanized steel sheet) Cold-rolled steel sheet | | Remarks |
|---|---|---|---|---|---|---|---|---|---|---|
| | | Hot rolling | | | Cold rolling | | | | | |
| | | Heating temperature (°C) | Rolling finish temperature (°C) | Coiling temperature (°C) | Cold rolling ratio (%) | Final pass elongation rate (%) | Surface roughness Ra of work roll in final pass (μm) | First side surface roughness Ra (μm) | Second side surface roughness Ra (μm) | |
| 18 | D | 1200 | 900 | 550 | 40 | 2.2 | 2.5 | 0.5 | 0.6 | Example |
| 19 | E | 1200 | 900 | 550 | 40 | 2.2 | 2.5 | 0.5 | 0.6 | Example |
| 20 | F | 1200 | 900 | 550 | 40 | 2.2 | 2.5 | 0.5 | 0.6 | Example |
| 21 | G | 1200 | 900 | 550 | 40 | 2.2 | 2.5 | 0.5 | 0.6 | Example |
| 22 | H | 1200 | 900 | 550 | 40 | 2.2 | 2.5 | 0.5 | 0.6 | Example |
| 23 | I | 1200 | 900 | 550 | 40 | 2.2 | 2.5 | 0.5 | 0.6 | Example |
| 24 | J | 1200 | 900 | 550 | 40 | 2.2 | 2.5 | 0.5 | 0.6 | Example |
| 25 | K | 1200 | 900 | 550 | 40 | 2.2 | 2.5 | 0.5 | 0.6 | Example |
| 26 | L | 1200 | 900 | 550 | 40 | 2.2 | 2.5 | 0.5 | 0.6 | Example |
| 27 | M | 1200 | 900 | 550 | 40 | 2.2 | 2.5 | 0.5 | 0.6 | Example |
| 28 | N | 1200 | 900 | 550 | 40 | 2.2 | 2.5 | 0.5 | 0.6 | Example |
| 29 | O | 1200 | 900 | 550 | 40 | 2.2 | 2.5 | 0.5 | 0.6 | Example |
| 30 | P | 1200 | 900 | 550 | 40 | 2.2 | 2.5 | 0.5 | 0.6 | Example |
| 31 | Q | 1200 | 900 | 550 | 40 | 2.2 | 2.5 | 0.5 | 0.6 | Example |
| 32 | R | 1200 | 900 | 550 | 40 | 2.2 | 2.5 | 0.5 | 0.6 | Example |
| 33 | A | 1200 | 900 | 550 | 40 | 0.1 | 2.5 | 0.3 | 0.3 | Example |
| 34 | A | 1200 | 900 | 550 | 70 | 2.2 | 2.5 | 0.5 | 0.4 | Example |
| 35 | A | 1200 | 900 | 550 | 40 | 0.1 | 2.5 | 0.3 | 0.3 | Example |
| 36 | A | 1200 | 900 | 550 | 40 | 2.2 | 2.5 | 0.5 | 0.4 | Example |

[Table 3]

Table 3

| No. | Production conditions | | | | | | | Remarks |
|---|---|---|---|---|---|---|---|---|
| | Annealing | | Alloying treatment | Temper rolling | | Post heat treatment | | |
| | Hydrogen concentration (vol%) | Soaking temperature (°C) | Alloying temperature (°C) | Elongation rate (%) | Surface roughness Ra of work roll (μm) | Treatment temperature (°C) | Treatment time (1) | |
| 1 | 10 | 830 | 530 | 0.1 | 1.0 | - | - | Example |
| 2 | 10 | 830 | 530 | 0.1 | 1.0 | - | - | Example |
| 3 | 10 | 830 | 530 | 0.1 | 1.0 | - | - | Example |
| 4 | 10 | 830 | 530 | 0.1 | 1.0 | - | - | Example |
| 5 | 10 | 830 | 530 | 0.1 | 1.0 | - | - | Comparative example |
| 6 | 10 | 830 | 530 | 0.1 | 1.0 | - | - | Example |
| 7 | 10 | 830 | 530 | 0.1 | 1.0 | - | - | Example |
| 8 | 10 | 830 | 530 | 0.1 | 1.0 | - | - | Comparative example |
| 9 | 25 | 830 | 530 | 0.1 | 1.0 | - | - | Comparative example |
| 10 | 10 | 830 | 530 | 0.1 | 1.0 | 100 | 24 | Example |
| 11 | 25 | 830 | 530 | 0.1 | 1.0 | 100 | 24 | Example |
| 12 | 10 | 830 | - | 0.1 | 1.0 | - | - | Example |
| 13 | 10 | 830 | 530 | 0.2 | 1.0 | - | - | Example |
| 14 | 10 | 830 | 530 | 0.4 | 1.0 | - | - | Example |
| 15 | 10 | 830 | 530 | ***0.6*** | 1.0 | - | - | Comparative example |
| 16 | 10 | 830 | 530 | 0.1 | 1.0 | - | - | Example |
| 17 | 10 | 830 | 530 | 0.1 | 1.0 | - | - | Example |
| 18 | 10 | 830 | 530 | 0.1 | 1.0 | - | - | Example |

(continued)

| No. | Production conditions | | | | | | | Remarks |
|---|---|---|---|---|---|---|---|---|
| | Annealing | | Alloying treatment | Temper rolling | | Post heat treatment | | |
| | Hydrogen concentration (vol%) | Soaking temperature (°C) | Alloying temperature (°C) | Elongation rate (%) | Surface roughness Ra of work roll (μm) | Treatment temperature (°C) | Treatment time (1) | |
| 19 | 10 | 830 | 530 | 0.1 | 1.0 | - | - | Example |
| 20 | 10 | 830 | 530 | 0.1 | 1.0 | - | - | Example |
| 21 | 10 | 830 | 530 | 0.1 | 1.0 | - | - | Example |
| 22 | 10 | 830 | 530 | 0.1 | 1.0 | - | - | Example |
| 23 | 10 | 830 | 530 | 0.1 | 1.0 | - | - | Example |
| 24 | 10 | 830 | 530 | 0.1 | 1.0 | - | - | Example |
| 25 | 10 | 830 | 530 | 0.1 | 1.0 | - | - | Example |
| 26 | 10 | 830 | 530 | 0.1 | 1.0 | - | - | Example |
| 27 | 10 | 830 | 530 | 0.1 | 1.0 | - | - | Example |
| 28 | 10 | 830 | 530 | 0.1 | 1.0 | - | - | Example |
| 29 | 10 | 830 | 530 | 0.1 | 1.0 | - | - | Example |
| 30 | 10 | 830 | 530 | 0.1 | 1.0 | - | - | Example |
| 31 | 10 | 830 | 530 | 0.1 | 1.0 | - | - | Example |
| 32 | 10 | 830 | 530 | 0.1 | 1.0 | - | - | Example |
| 33 | 10 | 830 | 530 | 0.1 | 1.0 | - | - | Example |
| 34 | 10 | 830 | 530 | 0.1 | 1.0 | - | - | Example |
| 35 | 10 | 830 | 530 | 0.1 | 1.0 | - | - | Example |
| 36 | 10 | 830 | 530 | 0.1 | 1.0 | - | - | Example |

[Table 4]

Table 4

| No. | Galvanized steel sheet | | | | | | | | | | | | | Classification |
|---|---|---|---|---|---|---|---|---|---|---|---|---|---|---|
| | sheet thickness t (mm) | Amount of diffusible hydrogen (mass ppm) | Fist side surface roughness Ra (μm) | Second side surface roughness Ra (μm) | IS (MPa) | Area ratio of martensite (%) | Coating weight | | Fe content of coating layer | | Resistance spot weldability | | | |
| | | | | | | | Fistside (g/m²) | Second side (g/m²) | First side (mass%) | Second side (mass%) | Min. nugget diameter D (mm) | D/√t | Evaluation | |
| 1 | 1.4 | 0.13 | 0.2 | 0.3 | 1190 | 64 | 50 | 55 | 10 | 10 | 3.3 | 2.8 | ◎ | Example |
| 2 | 1.4 | 0.13 | 0.4 | 0.4 | 1210 | 60 | 52 | 48 | 10 | 11 | 3.4 | 2.9 | ◎ | Example |
| 3 | 1.4 | 0.14 | 0.5 | 0.4 | 1189 | 57 | 51 | 53 | 10 | 10 | 3.9 | 3.3 | ○ | Example |
| 4 | 1.4 | 0.13 | 0.6 | 0.6 | 1202 | 67 | 54 | 56 | 11 | 10 | 4.4 | 3.7 | ○ | Example |
| 5 | 1.4 | 0.13 | ***0.7*** | ***0.7*** | 1224 | 57 | 53 | 53 | 10 | 10 | 5.0 | 4.2 | × | Comparative example |
| 6 | 1.4 | 0.15 | 0.4 | 0.3 | 1204 | 55 | 49 | 49 | 10 | 11 | 3.3 | 2.8 | ◎ | Example |
| 7 | 1.4 | 0.10 | 0.4 | 0.5 | 1225 | 69 | 55 | 51 | 10 | 11 | 4.1 | 3.5 | ○ | Example |
| 8 | 1.4 | 0.14 | ***0.7*** | ***0.7*** | 1240 | 62 | 54 | 53 | 11 | 11 | 4.9 | 4.1 | × | Comparative example |
| 9 | 1.4 | ***0.28*** | 0.5 | 0.5 | 1220 | 68 | 47 | 48 | 11 | 10 | 5.1 | 4.3 | × | Comparative example |
| 10 | 1.4 | 0.01 | 0.5 | 0.5 | 1210 | 61 | 50 | 57 | 11 | 10 | 3.2 | 2.7 | ◎ | Example |
| 11 | 1.4 | 0.01 | 0.4 | 0.4 | 1208 | 59 | 56 | 49 | 11 | 10 | 3.3 | 2.8 | ◎ | Example |
| 12 | 1.4 | 0.13 | 0.3 | 0.3 | 1221 | 67 | 53 | 48 | 0 | 0 | 3.7 | 3.1 | ○ | Exmple |
| 13 | 1.4 | 0.10 | 0.4 | 0.4 | 1214 | 63 | 48 | 54 | 10 | 11 | 4.2 | 3.5 | ○ | Example |
| 14 | 1.4 | 0.11 | 0.5 | 0.6 | 1225 | 66 | 54 | 55 | 10 | 10 | 4.6 | 3.9 | ○ | Example |
| 15 | 1.4 | 0.14 | ***0.7*** | ***0.7*** | 1231 | 69 | 47 | 47 | 11 | 10 | 5.1 | 4.3 | × | Comparative example |
| 16 | 1.4 | 0.09 | 0.4 | 0.5 | 1352 | 62 | 54 | 55 | 10 | 11 | 3.3 | 2.8 | ◎ | Example |
| 17 | 1.4 | 0.15 | 0.4 | 0.5 | 1512 | 61 | 56 | 50 | 11 | 10 | 3.2 | 2.7 | ◎ | Example |

(continued)

| No. | Galvanized steel sheet | | | | | | | | | | | | | Classification |
|---|---|---|---|---|---|---|---|---|---|---|---|---|---|---|
| | sheet thickness t (mm) | Amount of diffusible hydrogen (mass ppm) | Fist side surface roughness Ra (μm) | Second side surface roughness Ra (μm) | IS (MPa) | Area ratio of martensite (%) | Coating weight | | Fe content of coating layer | | Resistance spot weldability | | | |
| | | | | | | | Fistside ($g/m^2$) | Second side ($g/m^2$) | First side (mass%) | Second side (mass%) | Min. nugget diameter D (mm) | D/√t | Evaluation | |
| 18 | 1.4 | 0.14 | 0.5 | 0.5 | 1160 | 68 | 54 | 55 | 10 | 10 | 3.4 | 2.9 | ◎ | Example |
| 19 | 1.4 | 0.08 | 0.4 | 0.5 | 1314 | 67 | 53 | 52 | 11 | 11 | 3.4 | 2.9 | ◎ | Example |
| 20 | 1.4 | 0.14 | 0.4 | 0.5 | 1164 | 69 | 49 | 56 | 10 | 10 | 3.3 | 2.8 | ◎ | Example |
| 21 | 1.4 | 0.08 | 0.5 | 0.4 | 1310 | 60 | 54 | 55 | 10 | 10 | 3.5 | 3.0 | ◎ | Example |
| 22 | 1.4 | 0.13 | 0.5 | 0.4 | 1281 | 64 | 48 | 53 | 10 | 10 | 3.5 | 3.0 | ◎ | Example |
| 23 | 1.4 | 0.10 | 0.4 | 0.5 | 1275 | 66 | 54 | 52 | 10 | 10 | 3.4 | 2.9 | ◎ | Example |
| 24 | 1.4 | 0.14 | 0.5 | 0.5 | 1264 | 67 | 50 | 51 | 10 | 11 | 3.3 | 2.8 | ◎ | Example |
| 25 | 1.4 | 0.11 | 0.5 | 0.4 | 1284 | 69 | 53 | 54 | 10 | 10 | 3.4 | 2.9 | ◎ | Example |
| 26 | 1.4 | 0.09 | 0.5 | 0.5 | 1242 | 58 | 53 | 56 | 10 | 10 | 3.4 | 2.9 | ◎ | Example |
| 27 | 1.4 | 0.08 | 0.5 | 0.5 | 1251 | 60 | 53 | 53 | 10 | 10 | 3.3 | 2.8 | ◎ | Example |
| 28 | 1.4 | 0.10 | 0.4 | 0.5 | 1220 | 61 | 57 | 53 | 11 | 11 | 3.4 | 2.9 | ◎ | Example |
| 29 | 1.4 | 0.12 | 0.5 | 0.5 | 1234 | 69 | 51 | 52 | 10 | 10 | 3.4 | 2.9 | ◎ | Example |
| 30 | 1.4 | 0.11 | 0.5 | 0.5 | 1292 | 57 | 56 | 50 | 11 | 10 | 3.5 | 3.0 | ◎ | Example |
| 31 | 1.4 | 0.13 | 0.4 | 0.5 | 1199 | 58 | 53 | 52 | 10 | 10 | 3.3 | 2.8 | ◎ | Example |
| 32 | 1.4 | 0.09 | 0.4 | 0.4 | 1202 | 65 | 51 | 50 | 11 | 10 | 3.4 | 2.9 | ◎ | Example |
| 33 | 1.0 | 0.13 | 0.3 | 0.3 | 1195 | 63 | 53 | 55 | 10 | 10 | 2.8 | 2.8 | ◎ | Example |
| 34 | 1.0 | 0.12 | 0.4 | 0.3 | 1205 | 65 | 51 | 50 | 10 | 11 | 2.9 | 2.9 | ◎ | Example |
| 35 | 2.0 | 0.10 | 0.3 | 0.4 | 1201 | 61 | 52 | 50 | 10 | 10 | 3.9 | 2.8 | ◎ | Example |
| 36 | 2.0 | 0.13 | 0.3 | 0.3 | 1215 | 68 | 54 | 48 | 10 | 11 | 4.1 | 2.9 | ◎ | Example |

As indicated in Table 4, all of the examples had tensile strengths of 1,150 MPa or more and excellent resistance spot weldability.

In contrast, the comparative examples did not provide sufficient resistance spot weldability.

The galvanized steel sheet of the present disclosure has both high strength and excellent resistance spot weldability, and application to the framework of automobile bodies, especially around the cabin that affects crashworthiness of automobiles, contributes to improved safety performance and reduced body weight due to the high strength and sheet metal thinning. As a result, contribution to environmental aspects such as $CO_2$ emissions is also possible. The galvanized steel sheet of the present disclosure may also be actively applied to automobile undercarriage parts and other locations where corrosion due to rain and snow is a concern, and is expected to improve performance in terms of rust and corrosion resistance of automotive bodies. Further, the galvanized steel sheet may be applied not only to automotive parts, but also to civil engineering, construction, and home appliance fields.

## Claims

1. A galvanized steel sheet comprising a base steel sheet and a zinc or zinc alloy coating layer on a surface of the base steel sheet, wherein
the base steel sheet comprises:

    a chemical composition containing, in mass%,

        C: 0.08 % or more and 0.30 % or less,
        Si: less than 2.0 %,
        Mn: 1.5 % or more and 3.5 % or less,
        P: 0.010 % or less,
        S: 0.010 % or less,
        Al: 0.10 % or less, and
        N: 0.006 % or less

    with the balance being Fe and inevitable impurity;
    an amount of diffusible hydrogen in the base steel sheet is 0.20 mass ppm or less,
    surface roughness Ra of the galvanized steel sheet is 0.6 μm or less, and
    tensile strength is 1,150 MPa or more.

2. The galvanized steel sheet of claim 1, wherein the chemical composition of the base steel sheet further contains at least one of the following (1) to (5), in mass%:

    (1) at least one of Ti, Nb, V, and Zr totaling 0.10 % or less,
    (2) at least one of Mo, Cr, Cu, and Ni totaling 0.5 % or less,
    (3) B: 0.0050 % or less,
    (4) Sb: 0.10 % or less,
    (5) Sn: 0.10 % or less.

3. The galvanized steel sheet of claim 1 or 2, wherein the zinc or zinc alloy coating layer is a hot-dip galvanized layer or a galvannealed layer having Fe content: 8 mass% to 15 mass%.

4. The galvanized steel sheet of any one of claims 1 to 3, wherein a coating weight of one side of the zinc or zinc alloy coating layer is 20 g/$m^2$ to 120 g/$m^2$.

5. A cold-rolled steel sheet that is used as a material in production of the galvanized steel sheet of any one of claims 1 to 4, wherein
surface roughness Ra of the cold-rolled steel sheet is 1.0 μm or less.

## INTERNATIONAL SEARCH REPORT

International application No.
**PCT/JP2022/008094**

**A. CLASSIFICATION OF SUBJECT MATTER**

***C22C 38/00***(2006.01)i; ***C21D 9/46***(2006.01)i; ***C22C 38/06***(2006.01)i; ***C22C 38/60***(2006.01)i; ***C23C 2/06***(2006.01)i; *C22C 18/00*(2006.01)n
FI: C22C38/00 301T; C22C38/06; C22C38/60; C21D9/46 J; C23C2/06; C22C18/00

According to International Patent Classification (IPC) or to both national classification and IPC

**B. FIELDS SEARCHED**

Minimum documentation searched (classification system followed by classification symbols)

C22C38/00-38/60; C21D9/46-48; C23C2/00-2/40; C22C18/00-18/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/212047 A1 (NIPPON STEEL CORP.) 07 November 2019 (2019-11-07) claims | 1-5 |
| A | WO 2019/106895 A1 (JFE STEEL CORP.) 06 June 2019 (2019-06-06) claims | 1-5 |
| A | WO 2019/189849 A1 (JFE STEEL CORP.) 03 October 2019 (2019-10-03) claims | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/008094**

| Patent document cited in search report | Publication date (day/month/year) | Patent family member(s) | Publication date (day/month/year) |
|---|---|---|---|
| WO 2019/212047 A1 | 07 November 2019 | US 2021/0230712 A1 claims | |
| WO 2019/106895 A1 | 06 June 2019 | EP 3719157 A1 claims<br>US 2020/0377978 A1<br>CN 111433380 A | |
| WO 2019/189849 A1 | 03 October 2019 | EP 3754043 A1 claims<br>US 2021/0115529 A1<br>CN 111936650 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6795122 B